# EUROPÄISCHE PATENTANMELDUNG

(11) **EP 2 033 775 A1**
(43) Veröffentlichungstag der Anmeldung: **11.03.2009**
(21) Anmeldenummer: 07405273.9
(22) Anmeldetag: 10.09.2007
(51) Int. Cl.: B32B 27/08, A61J 1/03, B65D 75/36

(54) **Thermoformbares Laminat für Blisterbodentelle**

(71) Anmelder: Alcan Technology & Management Ltd., 8212 Neuhausen am Rheinfall (CH)
(72) Erfinder: Pasbrig, Erwin, 78224 Singen (DE)
(74) Vertreter: Burkhart, Hans

(57) **Zusammenfassung**

Ein thermoformbares Laminat (10) aus Kunststoff zur Herstellung von Bodenteilen von Blisterpackungen für gegen Feuchtigkeit empfindliche Produkte weist wenigstens eine Barriereschicht (14) gegen den Durchtritt von Feuchtigkeit, wenigstens eine Kinststoffschicht als Aussenschicht (16) und wenigstens eine Kunststoffschicht als siegelfähige Innenschicht (12) auf, wobei die wenigstens eine Barriereschicht (14) an die siegelfähige Innenschicht (12) grenzt. Die siegelfähige Innenschicht (12) weist eine höchstens 20 % der Gesamtdicke (D) des Laminates (10) entsprechende Dicke (d) auf. Das Laminat eignet sich zur Herstellung von Bodenteilen von Blisterverpackungen für gegen Feuchtigkeit empfindliche Produkte und bietet gegenüber herkömmlichen Laminaten nach dem Stand der Technik eine höhere Schutzwirkung gegen den Durchtritt von Feuchtigkeit und führt auch zu eine verringerten Querdiffusion.

## Beschreibung

Die Erfindung betrifft ein thermoformbares Laminat aus Kunststoff zur Herstellung von Bodenteilen von Blisterpackungen für gegen Feuchtigkeit empfindliche Produkte, mit wenigstens einer Barriereschicht gegen den Durchtritt von Feuchtigkeit, wenigstens einer Kunststoffschicht als Aussenschicht und wenigstens einer Kunststoffschicht als siegelfähige Innenschicht, wobei die wenigstens eine Barriereschicht an die siegelfähige Innenschicht grenzt.

Durch Thermoformen hergestellte Bodenteile von Blisterverpackungen werden für Produkte eingesetzt, welche einzeln aus den Näpfen entnommen werden. Die Verpackung schützt die Produkte gegen Beschädigung und Verschmutzung. Sind die Füllgüter empfindlich gegen Feuchtigkeit oder Gase, dann werden Folien oder Folienkombinationen verwendet, die eine Barriere gegen Feuchtigkeit und Gase bieten.

Zur Herstellung thermogeformter Blisterbodenteile werden üblicherweise Folien oder Folienkombinationen im Laminat aus thermoformbaren Kunststoffen auf Basis folgender Materialien eingesetzt:
- chlorierte Kohlenwasserstoffe (PVC, PVDC als Folie oder Beschichtung)
- Chlor-Fluor-Kohlenwasserstoffen (z.B. Aclar®)
- Polyolefine (z.B. Polypropylen, HDPE)
- Polytherephthalate (PET)
- Polyacrylnitrile (z.B. Barex®)
- Cycloolefin-Copolymere (COC)
- Cycloolefin-Polymere (COP)
- Polysulfone
- biologisch abbaubare Kunststoffe.
   Wenn die Barriereschicht mit dem Füllgut Wechselwirkungen eingeht oder nur schwer versiegelt werden kann, wird diese Schicht auf der Aussenseite angeordnet. Als Trägerfolie dient überwiegend PVC, PET und Polypropylen.
   Bei Anordnung der Barriereschicht an der Aussenseite des Laminates ist -- bedingt durch die Entfernung der Barriereschicht vom Produkt -- die Barrierewirkung geringer als wenn diese direkt oder so dicht wie möglich am Füllgut liegt. Hinzu kommt eine Verringerung der Lebensdauer von Füllgut infolge erhöhter Querdiffusion durch die Siegelnaht, was sich insbesondere bei gegen Feuchte sehr empfindlichen Produkten negativ auswirkt. Die asymmetrische Struktur der Laminate kann auch zu einer Krümmung der Blister nach der Vereinzelung an der Blistermaschine führen.
   Die US-B-6 589 642 offenbart symmetrisch aufgebaute Laminate mit einer in der Mitte zwischen zwei Polymerfilmen angeordneten Barriereschicht. Zur Erreichung der erforderlichen Steifigkeit und Verformbarkeit ist die Mindestdicke für das Laminat mit 269 µm angegeben. Die Dicke der Siegelschicht liegt zwischen 127 µm und 381 µm. Die dadurch bedingte, immer noch relativ grosse Entfernung der Barriereschicht zum Füllgut führt zu keiner wesentlichen Verbesserung der Barrierewirkung und Verminderung einer Querdiffusion durch die Siegelnaht.
   Der Erfindung liegt die Aufgabe zugrunde, ein zur Herstellung von Bodenteilen von Blisterverpackungen für gegen Feuchtigkeit empfindliche Produkte geeignetes thermoformbares Laminat der eingangs genannten Art zu schaffen, welches gegenüber herkömmlichen Laminaten nach dem Stand der Technik eine höhere Schutzwirkung gegen den Durchtritt von Feuchtigkeit und eine verminderte Querdiffusion aufweisen.
   Zur erfindungsgemässen Lösung der Aufgabe führt, dass die siegelfähige Innenschicht eine höchstens 20 % der Gesamtdicke des Laminates entsprechende Dicke aufweist.
   Der wesentlich Kern der Erfindung liegt darin, dass die Barriereschicht sehr eng an das Füllgut gelegt wird, das Füllgut aber keinen direkten Kontakt zur Barriereschicht hat. Zudem kann das Laminat mit üblichen Deckfolien gesiegelt werden, d.h., es sind keine speziellen Siegelmedien erforderlich.
   Bei einem ersten bevorzugten Laminataufbau ist die Aussenschicht bevorzugt eine Trägerfolie mit einer mindestens 45 % der Gesamtdicke des Laminates entsprechenden Dicke.
   Bei einem zweiten bevorzugten Laminataufbau grenzt eine Zwischenschicht an die Trägerfolie an. Zwischenschichten dienen der Verbesserung der Umformung oder der Steifigkeit.
   Bei einem dritten bevorzugten Laminataufbau sind zwei Barriereschichten angeordnet.
   Durch die mehrlagige Struktur des Laminates wird die erforderliche Steifigkeit und Planlage erreicht. Die folgenden Schichtaufbauten des Laminates sind bevorzugt:
   Siegelschicht / Barriereschicht / Trägerfolie
   Siegelschicht / Barriereschicht / Zwischenschicht / Trägerfolie
   Siegelschicht / erste Barriereschicht / zweite Barriereschicht / Trägerfolie.

Aus dem thermoformbaren Laminat kann auf bekannte Art ein Blisterbodenteil hergestellt werden. Die Siegelschicht des Laminates bildet dabei die Innenschicht des Blisterbodenteils.

Bei einer Blisterverpackung für gegen Feuchtigkeit empfindliche Produkte, insbesondere für pharmazeutische Produkte wie feuchteempfindliche Tabletten, Kapseln, Pulver -- aber nicht darauf beschränkt -- ist in bekannter Art eine Deckfolie gegen die Siegelschicht des Blisterbodenteils gesiegelt.

Die einzelnen Schichten der erfindungsgemäss aufgebauten Laminate können wie folgt ausgebildet sein.

### Siegelschichten

- PET-Folien in einer Dicke von 4 bis 30 µm, vorzugsweise 6 bis 23 µm.
- PVC-Folien in einer Dicke von 5 bis 100 µm, vorzugsweise 10 bis 60 µm.
- Folien aus Polyethylen (LD-, MD-, LLD-, HD-PE) und Metallozene aus Polyethylen (einzelne Folien oder Folienkombinationen) in einer Dicke von 8 bis 100 µm, vorzugsweise 10 bis 40 µm.
- Folien aus Polypropylen und Metallozene aus Polypropylen (einzelne Folien oder Folienkombinationen) in einer Dicke von 4 bis 100 µm, vorzugsweise 6 bis 40 µm.
- Folien aus PE / PVdC / PE (z.B. Seranex^{®}) in einer Dicke von 30 bis 150 µm, vorzugsweise 40 bis 120 µm.
- Folien aus Polycarbonat (PC) in einer Dicke von 8 bis 60 µm, vorzugsweise 10 bis 30 µm.
- Folien aus Polystyrol (PS) in einer Dicke von 8 bis 60 µm, vorzugsweise 10 bis 30 µm.
- Folien aus Polyvinylidendichlorid (PVdC, z.B. Saran^{®}) in einer Dicke von 8 bis 200 µm, vorzugsweise 10 bis 150 µm.
- Folien aus Acrylnitril-Copolymerisaten (z.B. Barex®) in einer Dicke von 10 bis 100 µm, vorzugsweise 20 bis 60 µm.
- Folien aus Surlyn^{®} in einer Dicke 10 bis 100 µm, vorzugsweise 15 bis 40 µm.
- Folien aus COC (z.B. Topas^{®}) oder COP (z.B. Zeonor^{®}) in einer Dicke von 6 bis 100 µm, vorzugsweise 10 bis 40 µm.
- Ethylen-Acrylsäure-Copolymer (EAA, z.B. Escor^{®}, Iotek^{®}, Primacor^{®}, Nucrel^{®}, Bynel^{®} in einer Dicke von 10 bis 60 µm, vorzugsweise 10 bis 30 µm.
- Ethylen-Vinylacetat-Copolymer (EVA, z.B. Elvax^{®}, Vinnolit VCEVA^{®}).

### Barriereschichten

- Polychlorfluorethylene, z.B. Polychlortrifluorethylen (Aclar^{®}) in einer Dicke von 10 bis 150 µm, vorzugsweise 15 bis 107 µm.
- Polyvinylidendichlorid (PVdC, z.B. IXAN^{®}, DIOFAN^{®}, KUROFAN^{®}) mit einem Auftragsgewicht von 5 bis 150 g/m², vorzugsweise 20 bis 120 g/m².
- Folien aus Polyvinylidendichlorid (PVdC, z.B. Saran^{®}) in einer Dicke von 25 bis 200 µm, vorzugsweise 10 bis 150 µm.
- Folien aus Acrylnitril-Copolymerisaten (z.B. Barex^{®}) in einer Dicke von 10 bis 100 µm, vorzugsweise 20 bis 60 µm.
- Polyvinylalkohole, z.B. Ethylenvinylalkohol
- PGA (Polyglycolic Acid)
- Folien aus COC (z.B. Topas^{®}) oder COP (z.B. Zeonor^{®}) in einer Dicke von 30 bis 200 µm, vorzugsweise 50 bis 150 µm.

### Zwischenschichten

- Polyamid-Folien in einer Dicke 12 bis 60 µm, vorzugsweise 15 bis 40 µm.
- Polyethylen-Folien in einer Dicke von 12 bis 45 µm, vorzugsweise 12 bis 33 µm.
- COC-Folien in einer Dicke von 10 bis 100 µm, vorzugsweise 12 bis 75 µm.
- COP-Folien in einer Dicke von 10 bis 100 µm, vorzugsweise 12 bis 75 µm
- Folien analog den Trägerfolien, welche gleich oder unterschiedlich sein können.

Trägerfolien können alle thermoformbaren Folien sein, z.B.:
- PVC-Folien in einer Dicke von 100 bis 500 µm.
- PET-Folien in einer Dicke von 100 bis 500 µm.
- COC-Folien in einer Dicke von 100 bis 400 µm.
- COP-Folien in einer Dicke von 100 bis 400 µm.
- PP-Folien in einer Dicke von 100 bis 500 µm.
- PE-Folien in einer Dicke von 100 bis 500 µm.

Beispielhafte Schichtaufbauten von Laminaten sind:
15 µm PVC / 76 µm PCTFE / 250 µm PVC
20 µm PVC / 107 µm PCTFE / 300 µm PP
10 µm PET / 51 µm PCTFE / 40 g/m² PVDC / 250 µm PVC
50 µm PE/PVdC/PE / 23 µm PCTFE 7 250 µm PET
12 µm PP / 30 µm Barex / 15 µm PCTFE / 250 µm PVC
15 µm PVC / 76 µm PCTFE / 75 µm COC / 200 µm PVC
10 µm PET / 51 µm PCTFE / 40 µm PA / 250 µm PVC
20 µm PP / 23 µm PCTFE / 60 µm PE/EVOH/PE / 200 µm PP

Die einzelnen Schichten bzw. Folien können durch Kaschierung mit allen herkömmlichen Systemen, d.h. z.B. mit wässrigen, lösemittelbasierten oder lösemittelfreien, auch strahlenhärtenden Klebstoffen, und/oder durch Extrusionskaschierung oder durch Coextrusion verbunden werden. Die Barriereschichten und die Siegelschichten können auch durch Extrusion/Coextrusion oder Beschichtung aufgetragen werden.

Zur besseren Verbindung können die Oberflächen bei der Herstellung und/oder Kaschierung/Extrusion/Beschichtung einer Corona- oder Plasmavorbehandlung unterzogen werden.

Die Folien können transparent oder gefärbt sein. Die Kaschierstoffe können auch eingefärbt sein. Zum Schutz gegen Fälschungen können den Kunststoffen und/oder den Kaschiermitteln Stoffe zugesetzt werden, welche mittels geeigneten Geräten detektiert werden, wie z.B. Taggents, up-Converter auf Basis IR oder UV, Optical Variable Inks.

Die Folien können frontal- oder konterbedruckt sein (auch vollflächig), oder die Zwischenfolien können bedruckt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau eines ersten thermoformbaren Laminates für die Herstellung von Blisterbodenteilen gemäss Fig. 4, entsprechend der Schnittlinie II-II von Fig. 5;
- Fig. 2 den Schichtaufbau eines zweiten thermoformbaren Laminates für die Herstellung von Blisterbodenteilen gemäss Fig. 4, entsprechend der Schnittlinie II-II von Fig. 5;
- Fig. 3 den Schichtaufbau eines dritten thermoformbaren Laminates für die Herstellung von Blisterbodenteilen gemäss Fig. 4, entsprechend der Schnittlinie II-II von Fig. 5;
- Fig. 4 die Draufsicht auf ein aus einem der Laminate von Fig. 1 bis 3 thermogeformtes Blisterbodenteil;
- Fig. 5 den Schnitt durch das Blisterbodenteil von Fig. 4 nach der Linie I-I;
- Fig. 6 den Schnitt durch das Blisterbodenteil von Fig. 4 nach der Linie I-I mit aufgesiegelter Durchdrückfolie bzw. peelbarer Deckfolie.

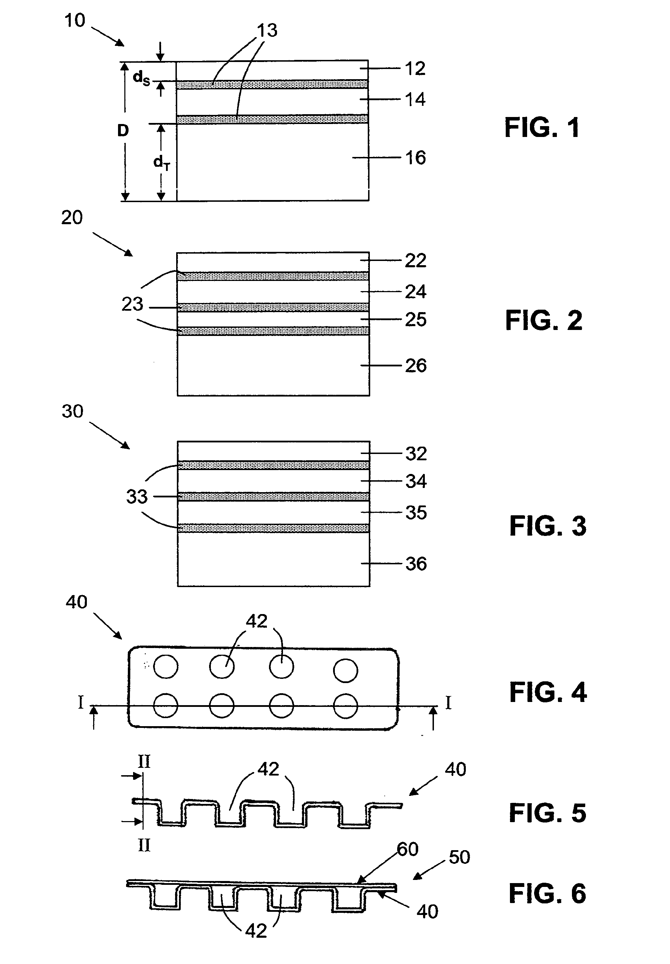

Ein erstes thermoformbares Laminat 10 für die Herstellung von Bodenteilen für Blisterverpackungen für feuchteempfindliche Produkte weist gemäss Fig. 1 den folgenden Schichtaufbau auf:
- 12: Siegelschicht, z.B. 15 µm PVC
- 13: Verbindungsschicht
- 14: Barriereschicht, z.B. 76 µm PCTFE
- 13: Verbindungsschicht
- 16: Trägerfolie, z.B. 250 µm PVC

Die Siegelschicht 12 bildet die spätere Innenseite und die Trägerfolie 16 die Aussenseite eines aus dem Laminat 10 hergestellten Blisterbodenteils.

Ein zweites thermoformbares Laminat 20 für die Herstellung von Bodenteilen für Blisterverpackungen für feuchteempfindliche Produkte weist gemäss Fig. 2 den folgenden Schichtaufbau auf:
- 22: Siegelschicht, z.B. 10 µm PET
- 23: Verbindungsschicht
- 24: Barriereschicht, z.B. 51 µm PCTFE
- 23: Verbindungsschicht
- 25: Zwischenschicht, z.B. 40 µm PA
- 23: Verbindungsschicht
- 26: Trägerfolie, z.B. 250 µm PVC

Die Siegelschicht 22 bildet die spätere Innenseite und die Trägerfolie 26 die Aussenseite eines aus dem Laminat 20 hergestellten Blisterbodenteils.

Ein dritttes thermoformbares Laminat 30 für die Herstellung von Bodenteilen für Blisterverpackungen für feuchteempfindliche Produkte weist gemäss Fig. 3 den folgenden Schichtaufbau auf:
- 32: Siegelschicht, z.B. 15 µm PVC
- 33: Verbindungsschicht
- 34: erste Barriereschicht, z.B. 76 µm PCTFE
- 33: Verbindungsschicht
- 35: zweite Barriereschicht, z.B. 75 µm COC
- 33: Verbindungsschicht
- 36: Trägerfolie, z.B. 15 µm PVC

Die Siegelschicht 32 bildet die spätere Innenseite und die Trägerfolie 36 die Aussenseite eines aus dem Laminat 30 hergestellten Blisterbodenteils.

Ein in Fig. 4 gezeigtes Blisterbodenteil 40 wird aus dem Laminat 10, 20, 30 hergestellt, wobei die aus dem Laminat herausgeformten Näpfe 42 zur Aufnahme von festen, niedrig- bis hochviskos flüssigen und/oder pulverförmigen Produkten, beispielsweise Tabletten durch Thermoformen aus dem Laminat herausgeformt sind.

Wie in den Fig. 5 und 6 dargestellt, wird nach dem Befüllen der Näpfe 52 zur Bildung einer Blisterpackung 50 je nach Bedarf eine durchdrückbare oder eine peelbare Deckfolie 60 auf das Bodenteil 40 aufgesiegelt.

Eine als Durchdrückfolie ausgestaltete Deckfolie 60 für ein aus dem Laminat 10, 20, 30 hergestelltes Blisterbodenteil 40 weist beispielsweise den folgenden Schichtaufbau auf: Siegelschicht / Aluminiumfolie / Druckvorlack / Bedruckung /Drucküberlack. Die Bedruckung mit dem Drucküberlack bildet die spätere Aussenseite der Deckfolie 60, die freie Seite der Aluminiumfolie wird gegen die Siegelschicht eines aus dem Laminat hergestellten Blisterbodenteils 40 gesiegelt.

Eine als peelbare Folie ausgestaltete Deckfolie 60 für ein aus dem Laminat 10, 20, 30 hergestelltes Blisterbodenteil 40 weist beispielsweise den folgenden Schichtaufbau auf: Siegelschicht / Aluminiumfolie / Klebstoffschicht / Film aus Polyethylenterephthalat (PET) / Klebstoffschicht / Papier / Bedruckung / Drucküberlack. Die Bedruckung mit dem Drucküberlack bildet die spätere Aussenseite der Deckfolie 60, die siegelbare Seite der Aluminiumfolie wird gegen die Siegelschicht eines aus dem Laminat hergestellte Blisterbodenteils 40 gesiegelt.

## Patentansprüche

1. Thermoformbares Laminat aus Kunststoff zur Herstellung von Bodenteilen (40) von Blisterpackungen (50) für gegen Feuchtigkeit empfindliche Produkte, mit wenigstens einer Barriereschicht (14, 24, 34, 35) gegen den Durchtritt von Feuchtigkeit, wenigstens einer Kunststoffschicht als Aussenschicht (16, 26, 36) und wenigstens einer Kunststoffschicht als siegelfähige Innenschicht (12, 22, 32) wobei die wenigstens eine Barriereschicht (14, 24, 34) an die siegelfähige Innenschicht (12, 22, 32) grenzt,
**dadurch gekennzeichnet, dass**
die siegelfähige Innenschicht (12, 22, 32) eine höchstens 20 % der Gesamtdicke (D) des Laminates (10, 20, 30) entsprechende Dicke (d_{S}) aufweist.

2. Thermoformbares Laminat nach Anspruch 1, **dadurch gekennzeichnet, dass** die Aussenschicht eine Trägerfolie mit einer mindestens 45 % der Gesamtdicke (D) des Laminates (10, 20, 30) entsprechenden Dicke (d_{T}) ist.

3. Thermoformbares Laminat nach Anspruch 2, **dadurch gekennzeichnet, dass** eine Zwischenschicht (25) an die Trägerfolie (26) angrenzt.

4. Thermoformbares Laminat nach Anspruch 1 oder 2, **dadurch gekennzeichnet, dass** zwei Barriereschichten (34, 35) angeordnet sind.

5. Thermoformbares Laminat nach Anspruch 1 oder 2, **gekennzeichnet durch** den Schichtaufbau Siegelschicht (12) / Barriereschicht (14) / Trägerfolie (16).

6. Thermoformbares Laminat nach Anspruch 3, **gekennzeichnet durch** den Schichtaufbau Siegelschicht (22) / Barriereschicht (24) / Zwischenschicht (25) / Trägerfolie (26).

7. Thermoformbares Laminat nach Anspruch 3, **gekennzeichnet durch** den Schichtaufbau Siegelschicht (32) / erste Barriereschicht (34) / zweite Barriereschicht (35) / Trägerfolie (36).

8. Blisterbodenteil, hergestellt aus einem thermoformbaren Laminat (10, 20, 30) nach einem der vorangehenden Ansprüche.

9. Blisterverpackung für gegen Feuchtigkeit empfindliche Produkte, mit einem Blisterbodenteil (40) hergestellt aus einem thermoformbaren Laminat (10, 20, 30) nach einem der vorangehenden Ansprüche und einer gegen die Siegelschicht (12, 22, 32) des Laminates (10, 20, 30) auf das Blisterbodenteil (40) gesiegelten Deckfolie (60).

10. Verwendung einer Blisterverpackung (50) nach Anspruch 9 für pharmazeutische Produkte wie feuchteempfindliche Tabletten, Kapseln und Pulver.
